**Europäisches Patentamt**

**European Patent Office**

**Office européen des brevets**

(19)

(11) Veröffentlichungsnummer : **0 391 047 B1**

## (12) EUROPÄISCHE PATENTSCHRIFT

(45) Veröffentlichungstag der Patentschrift :
23.12.92 Patentblatt 92/52

(51) Int. Cl.⁵ : **B60T 17/22,** F16D 66/02,
**B60T 8/88**

(21) Anmeldenummer : **90103089.0**

(22) Anmeldetag : **17.02.90**

(54) **Verfahren für die Bremsenprüfung und -überwachung bei Schienenfahrzeugen und Vorrichtung für die Ausübung des Verfahrens.**

(30) Priorität : **05.04.89 CH 1258/89**

(43) Veröffentlichungstag der Anmeldung :
**10.10.90 Patentblatt 90/41**

(45) Bekanntmachung des Hinweises auf die
Patenterteilung :
**23.12.92 Patentblatt 92/52**

(84) Benannte Vertragsstaaten :
**AT CH DE ES FR GB IT LI**

(56) Entgegenhaltungen :
**FR-A- 2 588 077**

(73) Patentinhaber : **INVENTIO AG
Seestrasse 55
CH-6052 Hergiswil NW (CH)**

(72) Erfinder : **Grazioli, Mario
Werkstrass 4
CH-7000 Chur (CH)**
Erfinder : **Anderegg, Kurt
Thalerstrasse 83
CH-9424 Rheineck (CH)**

EP 0 391 047 B1

**Beschreibung**

Die vorliegende Erfindung betrifft ein Verfahren für die Bremsenprüfung und -überwachung an Schienenfahrzeugen und eine Vorrichtung zur Ausübung des Verfahrens.

Es sind Überwachungssysteme bekannt für die Steuerung der Klimageräte und Türen sowie für den Gleitschutz und die Detektion flacher Stellen an Rädern. Mit der US-Patentschrift 4,718,622 ist ein zentrales Fehleranzeigesystem für Eisenbahnzüge bekannt geworden, mittels welchem neun verschiedene Funktionen bei einem maximal fünfzehnteiligen Eisenbahnzug durch zentral angeordnete Signallampen angezeigt werden. Die Funktionsmelder der einzelnen Wagen werden periodisch abgefragt und der Ausfall einer Funktion in einem oder mehreren Wagen wird durch Aufleuchten der entsprechend zugeordneten Signallampe angezeigt. für die Bremsen wird die Löse- und Anziehbewegung'quittiert. Durch die Anordnung von 9 mal 15 = 135 Signallampen ist im Pannenfall eine grobe Lokalisierung einer ausgefallenen Funktion möglich. Das System ist eine normale Hardwarelösung und in bekannter Digitaltechnik ausgeführt. Aktive und differenzierte Steuer- und Prüffunktionen sind von der Zentralstelle aus nicht möglich. Pro Funktion ist nur eine einstellige digitale Messgrösse ohne qualitativen Inhalt vorhanden und der Selbsttest beschränkt sich auf die Signallampenprüfung. Eine Diagnosefunktion ist nicht vorhanden und einzelne, aus einer Komposition losgelöste Wagen können nicht geprüft werden.

Die französische Anmeldeschrift FR-A-2 588 077 beschreibt eine Einrichtung, bei welcher die pneumatische Steuerung und Betätigung der Luftdruckbremse von einem Computer im Führerstand unterstützt und überwacht wird. Die Stellung des Führerbremsventils präsentiert einen Vorgabewert, und ein Luftdrucksensor im Bremszylinder wird als Ist-Wert rückgeführt und mit dem Vorgabewert verglichen. Am Monitor erscheinen Soll- und Istwert-Verlauf. Bei fachmännischer Interpretation können Schlüsse auf die Qualität des Pneumatiksystems gezogen werden. Unzulässige Abweichungen werden erkannt und angezeigt. Daten und Programme können gespeichert werden. Die manuelle Bremsprobe vor Abfahrt eines Eisenbahnzuges lässt sich mit dieser Einrichtung nicht umgehen, weil die Erfassung der Wege und Kräfte im mechanischen System der Bremsanlage und deren Interpretation nicht vorgesehen ist.

Der vorliegenden Erfindung liegt die Aufgabe zugrunde, das Verfahren der betrieblich vorgeschriebenen Bremsproben an beliebig zusammengestellten Zugskompositionen zu rationalisieren, den Wartungsaufwand, insbesondere für die Bremssysteme bei Schienenfahrzeugen, zu reduzieren und die Sicherheit der Bremssysteme zu erhöhen.

Diese Aufgabe wird durch die in den Ansprüchen gekennzeichnete Erfindung gelöst.

Durch diese Erfindung werden insbesondere folgende Vorteile erzielt:

Der Betriebszustand des Bremssystems wird laufend überprüft und angezeigt. Die Durchführung der herkömmlichen, personal- und zeitintensiven Bremsprobe wird überflüssig. An ihre Stelle tritt die Kontrolle der Zustandsmeldungen, welche vom Fahr- und übrigen Bahnpersonal jederzeit allein und schnell ausgeführt werden kann. Durch die quantitative Erfassung mehrerer Bremswirkungen wird der Sicherheitsgrad der automatischen Kontrolle höher. Der Bremsbelagverschleiss wird laufend überprüft und kann jederzeit abgerufen werden. Das Ersetzen der Beläge kann zugsweise und mit anderen Unterhaltsarbeiten besser abgestimmt werden. Störungen im Bremssystem können schneller lokalisiert und behoben werden. Unterschiede in den Bremsleistungen einzelner Wagen werden erkannt und können gezielt eliminiert werden (verbesserter Fahrkomfort durch geringeren Handorgeleffekt). Falschmessungen infolge defekter Sensoren werden vom System selber erkannt und führen in jedem Fall zu auf der sicheren Seite liegende Meldungen. Die quantitative Überwachung der Handbremse verhindert Radreifenverschliffe und verbessert die Sicherheit abgestellter Fahrzeuge gegen Wegrollen.

In den Zeichnungen ist ein Ausführungsbeispiel der Erfindung dargestellt und es zeigen

Fig. 1 ein Bremssystem,

Fig. 2 das Messstellenkonzept,

Fig. 3 das Gerätekonzept,

Fig. 4 das Messkonzept- und

Fig. 5 eine Diagnosefunktion.

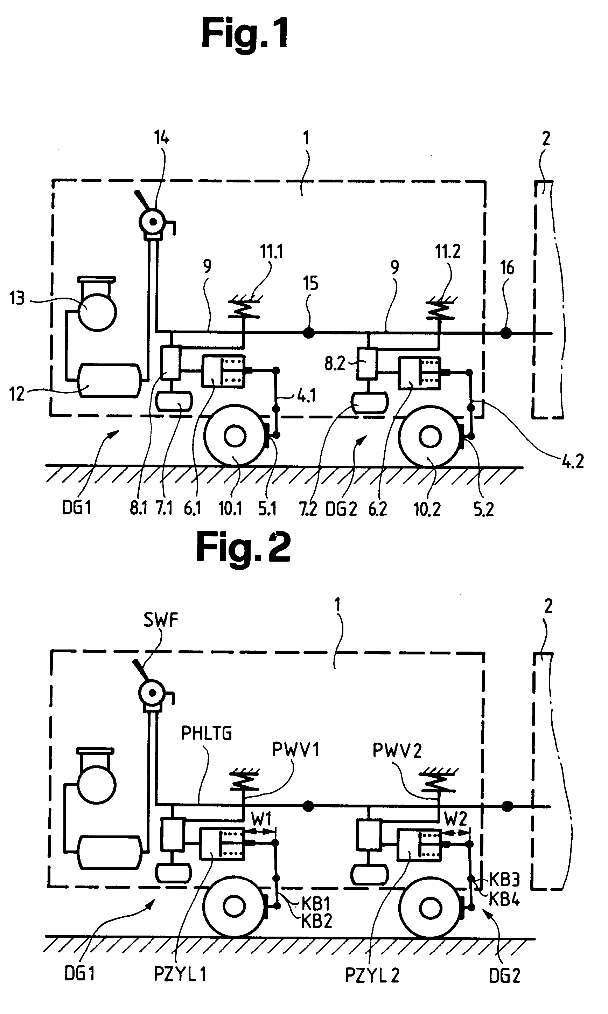

Die in den Figuren 1, 2 und 4 dargestellten Bremssysteme beziehen sich auf ein normales Schienenfahrzeug mit zwei Drehgestellen zu je zwei Achsen.

In der Fig. 1 ist ein solches Schienenfahrzeug mit 1 und ein weiteres, diesem ersten Schienenfahrzeug 1 angekuppelt, zweites Schienenfahrzeug 2 angedeutet. Ein Drehgestell DG1 hat Radsätze 10.1 mit Bremsbacken 5.1. Ein Bremsgestänge ist mit 4.1 bezeichnet. Das Pneumatiksystem des Drehgestells DG1 weist einen Bremszylinder 6.1, ein Bremsventil 8.1, einen Hilfsluftbehälter 7.1 und ein Wiegeventil 11.1 auf. Analog zu DG1 weist das Drehgestell DG2 einen Bremszylinder 6.2, ein Bremsventil 8.2, einen Hilfsluftbehälter 7.2 und ein Wiegeventil 11.2 auf. Eine Hauptluftleitung ist mit 9, eine Luftleitungskupplung zwischen den Drehgestellen

2

DG1 und DG2 mit 15 und eine weitere Luftleitungskupplung zwischen den Schienenfahrzeugen 1 und 2 mit 16 bezeichnet. Das Schienenfahrzeug 1 des gezeigten Ausführungsbeispiels kann ein Steuerwagen oder eine Lokomotive sein und weist deshalb noch ein Führerbremsventil 14, einen Kompressor 13 und einen Hauptluftbehälter 12 auf.

Fig. 2 zeigt die verschiedenen Messstellen im Bremssystem. Darin bedeuten:

SWF : Sollwert Führerbremsventil
PHLTG : Druck in der Hauptluftleitung
PWV1 : überlagerter Wiegeventildruck Drehgestell DG1
PWV2 : überlagerter Wiegeventildruck Drehgestell DG2
PZYL1 : Druck im Bremszylinder des Drehgestells DG1
PZYL2 : Druck im Bremszylinder des Drehgestells DG2
W1 : Weg am Bremszylinder 6.1 im Drehgestell DG1
W2 : Weg am Bremszylinder 6.2 im Drehgestell DG2
KB1 : Bremskraft am ersten Radsatz im Drehgestell DG1
KB2 : Bremskraft am zweiten Radsatz im Drehgestell DG1
KB3 : Bremskraft am ersten Radsatz im Drehgestell DG2
KB4 : Bremskraft am zweiten Radsatz im Drehgestell DG2

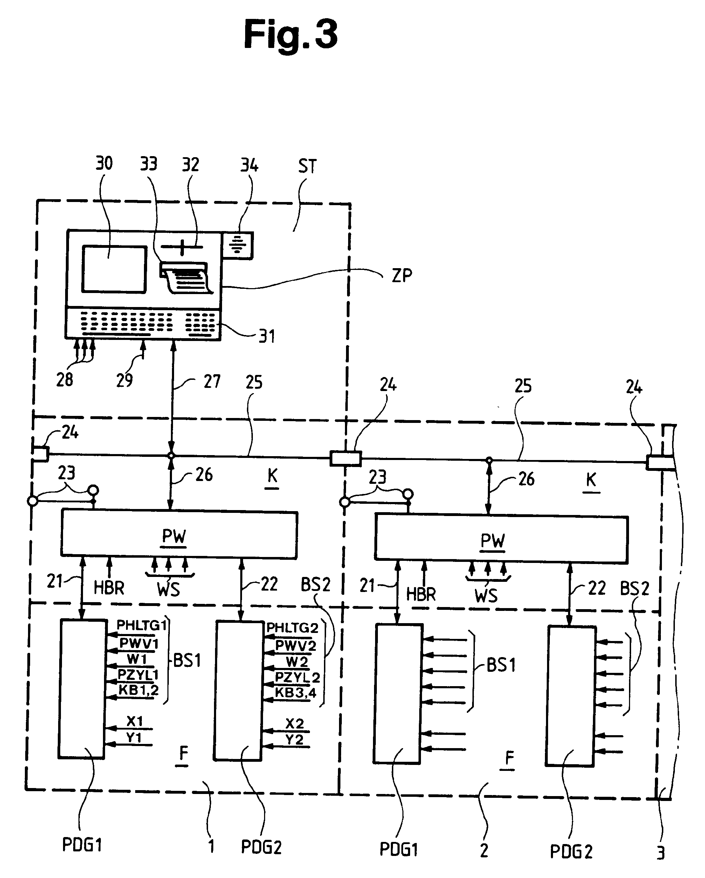

Beim Gerätekonzept in Fig. 3 sind die Schienenfahrzeuge 1, 2 und 3 gezeigt, wobei das Schienenfahrzeug 3 nur andeutungsweise dargestellt ist. Die Schienenfahrzeuge 1 und 2 sind je in einen Fahrwerkteil F und einen Kastenteil K unterteilt. Dem Schienenfahrzeug 1 ist ein Steuerteil ST angegliedert, weil dieses Schienenfahrzeug 1 ein Steuerwagen oder eine Lokomotive darstellt. Im Fahrwerkteil F der Schienenfahrzeuge 1, 2, 3 ... n befindet sich je ein Drehgestellprozessor PDG1 im ersten Drehgestell DG1 und je ein Drehgestellprozessor PDG2 im zweiten Drehgestell. Die Drehgestellprozessoren PDG1 und PDG2 haben Messstelleneingänge BS1 und BS2 von den Messstellen gemäss Fig. 2. Die Eingänge X1 und X2 bzw. Y1 und Y2 sind Verbindungen zu weiteren, hier nicht beschriebenen Messstellen. Eine Datenleitung 21 und eine Datenleitung 22 verbinden je die Drehgestellprozessoren PDG1, PDG2 mit einem Wagenprozessor PW. Diese Wagenprozessoren PW der Schienenfahrzeuge 1, 2, 3 ... n sind durch eine Datenleitung 26 mit einer Datenbusleitung 25 verbunden, deren Teilstücke in den einzelnen Schienenfahrzeugen eine Datenbus-Kupplung 24 beidenends aufweisen.

Mit WS sind Wagensystemsensoren und mit 23 je eine genormte innen- und aussenbordzugängliche Schnittstelle bezeichnet. Ein Eingang HBR meldet die Stellung der Handbremse. In einem Steuerteil ST befindet sich ein Zentralprozessor ZP, welcher via einer Datenleitung 27 mit der Datenbusleitung 25 verbunden ist. Die Eingaben für den Zentralprozessor ZP erfolgen über eine genormte Schnittstelle 29, von einer Tastatur 31 und/oder einem Datenträger 32. Als Ausgabegeräte sind ein Bildschirm 30, ein Drucker 33 und ein Lautsprecher 34 vorhanden. Mit 28 sind Dateneingänge weiterer hier nicht beschriebener Systeme bezeichnet.

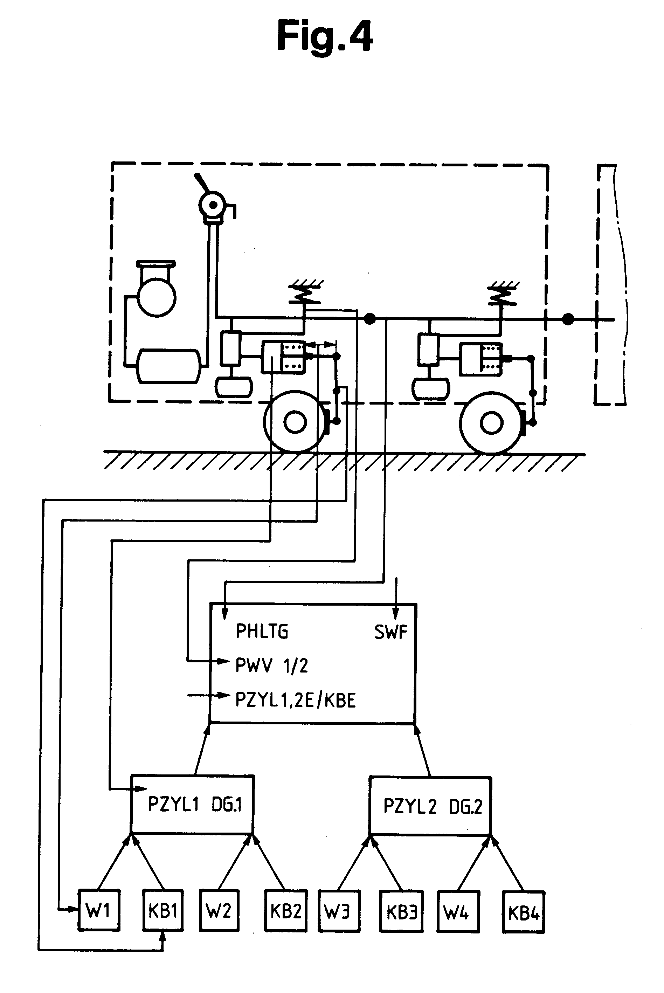

In der Fig. 4 werden die Beziehungen der in Fig. 2 bezeichneten Messstellen zueinander gezeigt. Die Gestängewege W1 und W2 sowie die Bremskräfte KB1 und KB2 stehen in einer festen Beziehung zum Zylinderdruck PZYL1 des Drehgestells DG1. Das gleiche gilt für das Drehgestell DG2 mit den Grössen W3, W4, KB3, KB4 und PZYL2. Die Bremszylinderdrücke PZYL1 und PZYL2 ihrerseits stehen in einer weiteren definierten Beziehung zum Hauptleitungsdruck PHLTG und zum belastungsabhängigen Wiegeventildruck PWV1 bzw. PWV2. Der von der Stellung des Führerbremsventils 14 erhaltene Sollwert Führerbremsventil SWF wird für die Bestimmung der Sollwerte Bremszylinder PZYL1E und PZYL2E sowie für die Berechnung des Bremskraftsollwertes KBE eingesetzt.

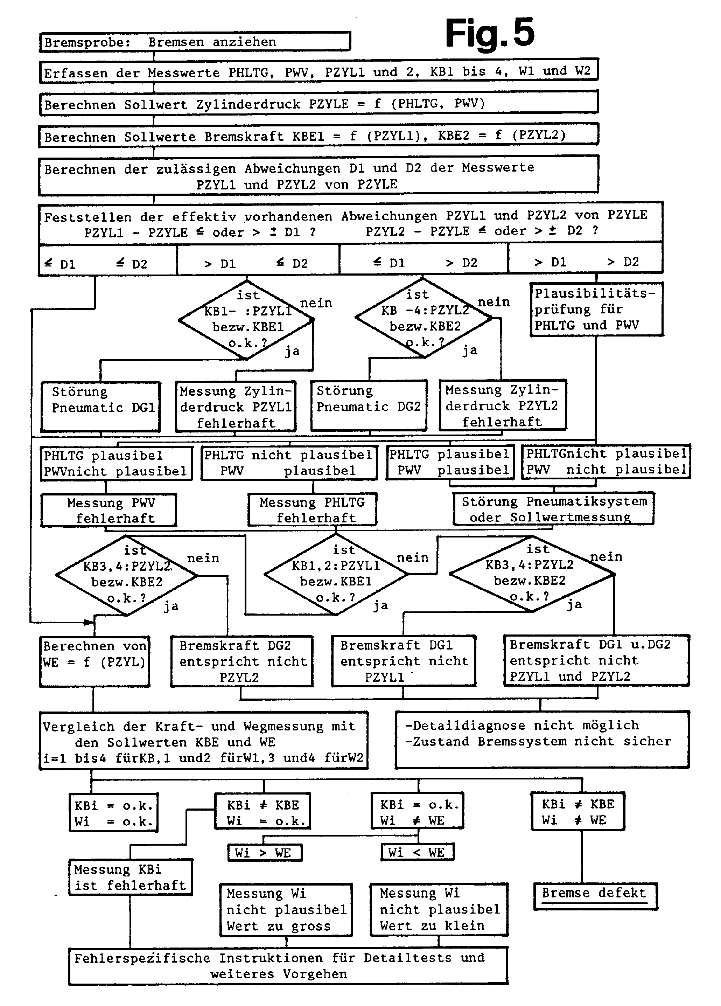

Fig. 5 zeigt in Form eines Flussdiagramms beispielhaft die Funktionen des Diagnosesystems bei einer Bremsprobe. Einzelheiten des Verfahrens werden in der nachfolgenden Beschreibung erklärt.

Verfahren und Einrichtung der vorstehend beschriebenen Einrichtung funktionieren wie folgt:

Die in der Fig. 2 bezeichneten Messstellen sind mit entsprechenden, dem rauhen Betrieb angepassten Sensoren ausgerüstet. Die Messstellen KB1 bis KB4 weisen eingeschweisste Dehnmessstreifen auf, welche in bekannter Art beispielsweise ihren ohm'schen Widerstand proportional zur Durchbiegung des Bremshebels verändern, woraus sich die Grössen der jeweiligen Bremskräfte ableiten lassen. Die Gestängeweg-Messstellen W1 bis 2 sind mit Linear-Weggeber ausgerüstet und machen verschiedene Aussagen. Die einfachste Aussage betrifft die Feststellung, ob sich der betreffende Kolben im Bremszylinder 6.1 bzw. 6.2 bewegt oder nicht. Eine weitere Aussage meldet den Betätigungsweg W1 bzw. W2 und informiert so über das Spiel Bremsklotz-Rad bzw. Scheibe. Aus dem längerzeitlichen Weg-Zeit-Diagramm sind dann einerseits die Nachstellfunktionen einer automatischen Gestängenachstellung und anderseits aus der Summe der Nachstellwege der Betrag der Bremsklotz- bzw. Bremsbelagsabnützung ersichtlich. Letzteres erübrigt den Einbau von Bremsbelagsdickensensoren. Druckwandler setzen die momentanen Luftdrücke in der Hauptleitung 9 für die Messstelle PHLTG, im Bremsventil 8.1 bzw. 8.2 für PZYL1 bzw. PZYL2, und im Wiegeventil 11.1 für PWV1 bzw. PWV2 in elektrische Werte um. Die pro Drehgestell DG1 und DG2 vorhandenen Messstellen bilden die Messstelleneingänge BS1 und BS2 an den ebenfalls fest eingebauten Drehgestellprozessoren PDG1 und PDG1.

Weitere Eingänge X1, Y1 bzw. X2, Y2 können beispielsweise mit Wärme- und/oder Vibrationsmessstellen verbunden sein. Datenleitungen 21 und 22 verbinden die Drehgestellprozessoren DG1 und DG2 mit einem Wagenprozessor PW im Kasten der Schienenfahrzeuge 1, 2, 3 ... n. Der Wagenprozessor PW ist im Schienenfahrzeug jeweils an gut zugänglicher Stelle, beispielsweise in einem Plattformsektor installiert. Er weist noch die weiteren Eingänge WS auf, welche dem Datenaustausch mit den verschiedenen Kasten-Systemen wie Klima, Türen, Beleuchtung, Batterienetz, Lautsprecher, Feuermelder etc. dienen. Nicht dargestellte Reserveeingänge sind für nachträglichen Weiterausbau des Überwachungs- und Diagnosesystems bestimmt. Die genormte Schnittstelle 23, beispielsweise RS 232, dient der Kommunikation mit einem mobilen oder einem auf einem Bahnhofperron installierten, als Zentralprozessor (ZP) funktionierenden Computer. Die genormte Schnittstelle 23 ist sowohl im Wageninnern wie auch, bei geschlossenen Türen, von aussen zugänglich. Die Kommunikation dient dazu, um gespeicherte Daten einer vergangenen und bis zur Gegenwart reichenden Betriebsperiode abzurufen, verschiedene Systemtests durchzuführen und allenfalls Änderungen am Verarbeitungs- und Speicherprogramm des Wagenprozessors vorzunehmen. Bei den Systemtests sind nebst Programmabläufen auch die Bremskraft der Handbremse, der Zustand des Batterienetzes sowie Statussignale weiterer Wagensysteme abrufbar. Auf diese Weise können an einzelnen Schienenfahrzeugen die Bremssysteme und die weiteren technischen Einrichtungen ohne angekuppelte Lokomotive geprüft und allfällige Störungen an Brems- und anderen Systemen schon beim Zusammenstellen einer Zugskomposition erkannt werden. Ein mobiler Computer ist in der einfachsten Form ein kleines Datenablesegerät, ein sogenanntes "Pocket-Terminal", und in der anderen Form ein mit allen Peripheriegeräten ausgerüsteter Service-PC. Der als Zentralprozessor (ZP) funktionierende Bordcomputer ist im Führerstand der Lokomotive, bzw. des Steuerwagens plaziert. Er ist dauernd via die Datenleitung 27 mit der durchgehenden Datenbusleitung 25 verbunden. Nebst allen genannten kommunikativen Funktionen besteht ein wichtiger Zweck des Verfahrens und der Vorrichtung darin, die betrieblich vorgeschriebenen Bremsproben, wie Abschreiten des Zuges, Anschlagen der Bremsklötze mit dem Hammer oder Ablesen der einzelnen Anzeigen bei Scheibenbremsen, zu ersetzen. Bei der Bremsprobe-Funktion ist es bei allfälligen Störungen wichtig, zu wissen, was die Ursache ist und wie im weiteren vorzugehen ist. Alle diese und weitere Informationen liefert das Diagnosesystem als Bestandteil des Daten-Verarbeitungsprogrammes im Zentralprozessor ZP.

Bevor auf das Diagnosekonzept eingegangen wird, soll kurz die Funktion der pneumatischen Zugsbremse erklärt werden. Die prinzipielle Wirkungsweise ist aus den Figuren 1, 2 und 4 ersichtlich. In der Lösestellung sind die Hauptluftleitung 9 und der Hilfsluftbehälter 7.1 und 7.2 gefüllt. Die Rückzugfedern in den nicht druckbeaufschlagten Bremszylindern 6.1 und 6.2 bewirken, dass sich die Bremsklötze vom Rad bzw. von einer Bremsscheibe abheben. Wird die Hauptluftleitung 9 über das Führerbremsventil 14 entleert, strömt Luft von den Hilfsbehältern 7.1 und 7.2 über die Bremsventile 8.1 und 8.2 in die Bremszylinder 6.1 und 6.2. Je stärker die Absenkung in der Hauptleitung 9 ist, desto grösser sind die Bremszylinderdrücke PZYL1 und PZYL2 bzw. die Bremskräfte KB1 bis 4 an den Klötzen 5.1.

Als Stell- oder Eingangsgrösse wirkt der Druck in der Hauptleitung PHLTG. Als Ausgangsgrössen oder Bremswirkungen können die Bremszylinderdrücke PZYL1 und 2, die Klotz- oder Backenkräfte KB1 bis 4 und die Stellwege W1 und 2 bezeichnet werden. In vielen Fällen muss ein Schienenfahrzeug umso stärker abgebremst werden, je höher das Gewicht der Ladung ist. Man spricht dann von einer sogenannten Lastabbremsung, wobei dann dem Hauptleitungsdruck PHLTG ein zweiter Steuerdruck PWV1 und 2 aus den Wiegeventilen 11.1 und 11.2 überlagert wird.

Das Grundprinzip des vorgeschlagenen Diagnosekonzeptes ist, den einer bestimmten Stellung des Führerbremsventils 14 entsprechenden Sollwert KBE der Bremswirkungen zu bestimmen und diesen mit den gemessenen effektiven Werten zu vergleichen. Dabei werden mehrere in gegenseitiger Abhängigkeit stehende gleichwertige Grössen erfasst. Unter der Annahme, dass zu einem bestimmten Zeitpunkt nur <u>eine</u> Fehlmessung auftreten kann, können durch Anwendung des Majoritätsprinzips sowohl Zustandsmeldungen über das Bremssystem als auch über das Diagnosesystems selber (Eigendiagnose) erzeugt werden. Aufgrund der vorhandenen Vorrichtung kann nun das Verfahren der Bremsprobe durch das Fahr- bzw. Führerpersonal an Bord der zu prüfenden Zugskomposition durchgeführt werden. Eine Bremsprobeoperation besteht aus mindestens einmaligem Anziehen und Lösen der Bremsen. Der Funktionsablauf einer Diagnose beim Anziehen der Bremsen ist durch das Flussdiagramm in Fig. 5 dargestellt. Es beginnt beispielsweise mit der Positionierung des Führerbremsventils 14 auf Stellung volle Bremskraft. Nach einer systembedingten Reaktionszeit werden die Messwerte PHLTG, PWV1 und 2, PZYL1 und 2, W1 und 2 und KB1 bis 4 von jedem Fahrzeug der Komposition erfasst und es werden danach die Sollwerte PZYLE, KBE1 und KBE2 berechnet. Nach dem Berechnen der zulässigen Abweichungen D1 und D2 der Messwerte PZYL1 und PZYL2 von PZYLE werden im nächsten Schritt die effektiv vorhandenen Abweichungen festgestellt. Daraus ergeben sich vier Möglichkeiten. Erste Möglichkeit: Die Abweichungen der Messwerte PZYL1 und PZYL2 sind kleiner oder gleich der zulässigen Abweichungen D1 und D2 zu PZYLE. In diesem Fall ist das Bremssystem mit angezogenen Bremsen in Ordnung. Zweite Möglichkeit: Die Abweichung des Messwertes PZYL1 ist grösser als die zulässige Abweichung D1 zu PZYLE, und PZYL2 weicht nicht mehr als um D2 von PZYLE ab. In diesem Fall wird das Verhältnis der Bremskräfte KB1 bis 2 zu PZYL1 bzw. zu KBE1 geprüft. Bei positivem Resultat muss eine Pneumatikstörung im Drehgestell DG1 vorliegen und im anderen Fall ist die Zylinderdruckmessung PZYL1 fehlerhaft. Es erfolgt die entsprechende Anzeige am Monitor, sowie ein entsprechender Protokollausdruck. Die dritte Möglichkeit zeigt einen analogen Vorgang wie bei der zweiten, mit dem Unterschied, dass es das Drehgestell DG2 betrifft. Bei der vierten Möglichkeit würde festgestellt, dass beide Zylinderdrücke PZYL1 und 2 über das zulässige Mass vom Sollwert PZYLE abweichen.

Nebst einer Nachprüfung der Sollwerte wird im folgenden eine Plausibilitätsprüfung der Messwerte PHLTG und PWV1 und 2 vorgenommen. Daraus ergeben sich wieder vier Möglichkeiten. Die ersten zwei ergeben die Aussage, dass die Messung PWV bzw. PHLTG fehlerhaft sei und bei der dritten und vierten Möglichkeit diagnostizieren beide eine Störung im Pneumatiksystem oder in der Sollwertmessung. Die vorliegenden Aussagen sind jedoch nicht endgültig. Es werden im weiteren die Beziehungen der Bremskräfte KB1 bis 4 zu PZYL1 und 2 bzw. zu KBE1 und 2 drehgestellweise geprüft. Daraus ergeben sich in drei Fällen die Aussagen, dass die Bremskräfte des Drehgestells DG1 oder DG2 oder beider Drehgestelle DG1 und DG2 nicht dem PZYL1 oder PZYL2 bzw. PZY1 und 2 entprechen. Liegen solche Ergebnisse vor, ist eine Detaildiagnose noch nicht möglich, aber man weiss dass der Zustand des Bremssystems nicht sicher ist und man wird die Bremsprobe wiederholen. Bei positivem Ausgang wird nach einer Zwischenberechnung der Beziehung Wegsollwerte WE = f (PZYL) ein Vergleich der Kraft- und Wegmessungen KB1 bis 4 und W1 und 2 mit den Sollwerten KBE und WE vorgenommen. Von den vier Ausgangsmöglichkeiten führen deren drei zu den Feststellungen, dass die Messung der Kraft- oder Wegsensoren fehlerhaft sei. Für den Fachspezialisten werden entsprechende Anweisungen für Tests an den fehlerhaften Messstellen ausgegeben. Die Zustandsmeldungen einer solchen Bremsdiagnose ersetzen eine herkömmliche Bremskontrolle vollständig und sind in ihrer Aussagekraft sicherer.

Die Meldung "Bremssystem in Ordnung" bedeutet:
- In allen Bremszylindern eines Schienenfahrzeugs bzw. einer Zugskomposition haben sich Drücke aufgebaut, welche betragsmässig ihren Sollwerten entsprechen.
- An allen Bremsbacken haben sich Anpresskräfte aufgebaut, welche betragsmässig den Sollwerten entsprechen.
- Alle Bremsgestänge haben Bewegungen ausgeführt, welche betragsmässig den Sollwerten entsprechen.
- Die Ansprechzeiten entsprechen den vorgegebenen Sollwerten.

Eine Bremsprobe ist als gut befunden, wenn für alle Schienenfahrzeuge einer Komposition die Meldung "Bremsen in Ordnung" vorliegt. Ein Gut-Befund schliesst aus:
- zu geringe Bremsleistung,
- ein Eiskeil zwischen Bremsbacke und -scheibe,
- blockiertes Bremsgestänge durch Femdkörper,
- schlechter Wirkungsgrad des Gestänges infolge mangelnder Schmierung.

Bei einzelnem Sensordefekt lautet die Zustandsmeldung beispielsweise
- Bremsfunktion gewährleistet,
- Drucksensor Bremszylinder im DG1 bzw. DG2 des Wagens n defekt.

Sind zwei Sensoren im gleichen Drehgestell defekt, so wird das entsprechende Bremssystem als fehlerhaft signalisiert, um die Eigensicherheit zu gewährleisten.

Die Überwachung der Handbremse erfolgt zusammen mit einem Endschalter, welcher die Betätigung der Handbremse meldet und der Backenkraftmessung KB1 bis 4. Die Meldung "Handbremse angezogen" wird erzeugt, wenn ein Handbremsmechnismus betätigt wurde, die pneumatische Bremse gelöst ist und die Backenkraft einen bestimmten Grenzwert erreicht hat. Diese Situation stellt den Normalfall für ein abgestelltes Schienenfahrzeug dar. Eine angezogene Handbremse ergibt bei der Bremsprobe einer abfahrbereiten Zugskomposition einen zur pneumatisch erzeugten Bremskraft überlagerten Kraftbetrag, welcher zusammen mit dem Betätigungssignal der entsprechenden Handbremse eine Abfahrtsperre einlegt. Die Handbremsüberwachung erweist sich insbesondere im Fahrbetrieb als sehr nützlich und verhindert die Entstehung von Schleifstellen an Wagenrädern.

Die Ausgabe der Meldungen beim Zentralprozessor kann grundsätzlich in optischer, akustischer und schriftlicher Form erfolgen. Sinnvollerweise wird eine Fahrtfreigabe nach der Bremsprobe optisch und akustisch angezeigt, wohingegen bei Störungen oder speziellen Tests ein Protokollausdruck vernünftig ist. Einzelheiten über den Ausgabemodus sind in erster Linie durch entsprechende Betriebsvorschriften reglementiert.

Das Überwachungs- und Diagnosesystem bietet eine Reihe weiterer Vorteile und Möglichkeiten. So wird der Bremsbelagverschleiss laufend überprüft und kann jederzeit abgerufen werden. Das Ersetzen der Beläge kann zugsweise und mit anderen Unterhaltsarbeiten besser abgestimmt werden. Störungen im Bremssystem können schneller lokalisiert und behoben werden. Unterschiede in den Bremsleistungen einzelner Wagen werden erkannt und können eliminiert werden, was besseren Fahrkomfort durch geringeren Handorgeleffekt ergibt.

In einer weitergebildeten Form des zentralen Anzeige- und Diagnosesystems werden als wichtig erachtete Änderungen der Betriebs- und Zustandsdaten via Sprachsynthesizer z.B. während der Fahrt über einen Lautsprecher 34 dem Führerpersonal bekanntgegeben. Es sind in einer einfacheren Form der vokalen Ausgabe beliebige Akustiksignale generierbar, welche gemäss Definition entsprechende Hinweise und/oder Warnungen bedeuten.

Kapazität und Verarbeitungsgeschwindigkeit eines Zentralprozessors (ZP) reichen aus, um Zustands- und Betriebsdaten sämtlicher technischer Systeme einer Zugskomposition auf gleiche Weise wie beschrieben zu bearbeiten.

Überwachungsprozesse, welche einen gewissen Sicherheitsgrad erfordern, werden hard- und softwaremässig rendundant ausgeführt.

**Patentansprüche**

1.  Verfahren für die Bremsenprüfung und -Ueberwachung an Schienenfahrzeugen,
    dadurch gekennzeichnet,
    dass an zentraler Stelle (ZP) eines Eisenbahnzuges via Wagenprozessoren (PW) als Daten erfasste, den Funktionsablauf und die Qualität darstellende Luftdruckwerte (PZYL, PHLTG, PWV) und Vorgabewerte (SWF) des pneumatischen Systems einer Bremsanlage und als Daten erfasste, die Bewegungen und Kräfte im mechanischen System einer Bremsanlage darstellende Wegwerte (W) an Bremszylindern (6.1) und Kraftwerte (KB) an Bremshebeln (4.1) mittels eines Diagnoseverfahrens in optischer, schriftlicher und akustischer Form Informationen als Fahrtfreigabe, Wartungshinweis, Fehlerangabe, Instruktion oder Fahrtsperre ausgegeben werden.

2.  Verfahren nach Anspruch 1
    dadurch gekennzeichnet,
    dass im Wagenprozessor (PW) Luftdruckdaten der Pneumatik, Weg- und Kräftedaten der Bremsmechanik und Zustandsdaten von Handbremse, Batterie, Heizung, Klima und Intercom gespeichert werdem und dass diese gespeicherten Daten am abgestellten Fahrzeug als Ereignisprotokolle an genormten Schnittstellen (23) abgerufen werden.

3.  Verfahren nach Anspruch 1
    dadurch gekennzeichnet,
    dass durch die Speicherung der Wege (W1,W2) am Bremszylinder (6.1) eine Information für die Abnützung der Bremsbacke (5.2) errechnet und beim Erreichen vorbestimmter Werte der Wartungshinweis ausgegeben wird.

4.  Verfahren nach Anspruch 1
    dadurch gekennzeichnet,
    dass im Diagnoseverfahren eine Eigensicherheit der Messdatenerfassung ergebender Plausibilitätstest durchgeführt wird.

5.  Vorrichtung zur Durchführung des Verfahrens nach Anspruch 1
    dadurch gekennzeichnet,
    dass eine Brems-Prüf- und -Diagnose-Einrichtung einen Zentralprozessor (ZP) mit visuellen (30,33), magnetischen (32) und akustischen (34) Ausgabeeinrichtungen, via Datenleitungen (25,26,27) mit dem Zentralpprozessor (ZP) verbundene Wagenprozessoren (PW), via Datenleitungen (21) und Datenbuskupplungen (24) mit den Wagenprozessoren (PW) verbundene Drehgestellprozessoren (PDG1,PDG2) mit Messstelleneingängen (BS1,BS2) aufweist und dass mit den Messstelleneingängen (BS1, BS2) verbundene Drucksensoren in der Hauptbremsleitung (9/ PHLTG1,PHLTG2), in den Bremszylindern (6.1,6.2/ PZYL1,PZYL2) und in den Wiegeventilen (11.1,11.2/ PWV1,PWV2), Weggeber (W1,W2) an den Bremszylindern (6.1,6.2) und Kraftgeber (KB1,KB2,KB3,KB4) in den Bremshebeln (4.1,4.2) vorhanden sind.

**6.** Vorrichtung nach Anspruch 5
dadurch gekennzeichnet,
dass Wagenprozessoren (PW) Dateneingänge (HBR) von der Handbremsestellung und von den Wagensystemsensoren (WS) und eine genormte Schnittstelle (23) aufweisen.

**Claims**

**1.** Method for the testing and monitoring of brakes at rail vehicles, characterised thereby that at a central location (ZP) of a railway train information data are issued, in optical, script and acoustic form as travel clearance, maintenance advice, fault indication, instruction or travel obstruction, by means of a diagnostic process via carriage processors (PW) processing, as data, detected air pressure values (PZYL, PHLTG, PWV) and preset values (SWF) of the pneumatic system of a brake installation, which values represent the functional course and quality and, as data, detected travel values (W) of brake cylinders (6.1) and force values (KB) of brake levers (4.1), which values represent the movements and forces in the mechanical system of a brake installation.

**2.** Method according to claim 1, characterised thereby that air pressure data of the pneumatic system, travel and force data of the brake mechanism and state data of the handbrake, battery, heating, airconditioning and intercom are stored and that these stored data at the shunted vehicle are called up as action protocols at standardised interfaces (23).

**3.** Method according to claim 1, characterised thereby that an information for the wear of the brake shoes (5.2) is calculated by the storage of the travel (W1, W2) of the brake cylinder (6.1) and on the reaching of predetermined values the maintenance advice is issued.

**4.** Method according to claim 1, characterised thereby that a plausibility test yielding intrinsic security of the measurement data detection is carried out in the diagnostic process.

**5.** Device for the carrying out of the method according to claim 1, characterised thereby that a brake testing and diagnostic equipment comprises a central processor (ZP) with visual (30, 33), magnetic (32) and acoustic (34) output equipments, carriage processors (PW) connected with the central processor (ZP) by way of data conductors (25, 26, 27), and bogie processors (PDG1, PDG2), connected with the carriage processors (PW) by way of data conductors (21) and data bus couplings (24), with measuring point inputs (BS1, BS2), and that pressure sensors connected with the measuring point inputs (BS1, BS2) are present in the main brake line (9/PHLTG1, PHLTG2), in the brake cylinders (6.1, 6.2/PZYL1, PZYL2) and in the rocker valves (11.1, 11.2/PWV1, PWV2), travel transducers (W1, W2) are present at the brake cylinders (6.1, 6.2), and force transducers (KB1, KB2, KB3, KB4) are present in the brake levers (4.1, 4.2).

**6.** Device according to claim 7, characterised thereby that carriage processors (PW) comprise data inputs (HBR) of the handbrake setting and of the carriage system sensors (WS) and a standardised interface (23).

**Revendications**

**1.** Procédé pour le contrôle et la surveillance des freins sur des véhicules sur rails, caractérisé en ce que, au niveau d'un poste central (ZP) d'un train de chemin de fer, par l'intermédiaire de processeurs de wagons (PW), des valeurs de pression d'air (PZYL, PMLTG, PWV), détectées sous la forme de données et représentant le déroulement fonctionnel et la qualité, et des valeurs prédéfinies (SWF) du système pneumatique d'une installation de freins, ainsi que des valeurs de course (W), détectées sous la forme de données et représentant les mouvements et les forces dans le système mécanique d'une installation de freins, au niveau de cylindres de freins (6.1), et des valeurs de force (KB) au niveau de leviers de freins (4.1) fournissent sous forme optique, écrite et acoustique des informations, à l'aide d'un procédé de diagnostic, sous forme de déblocage de marche, d'indication d'entretien, d'indication de défaut, d'instruction ou de blocage de marche.

**2.** Procédé selon la revendication 1, caractérisé en ce que des données de pression d'air du système pneumatique, des données de course et de force du mécanisme de freins et des données d'état du frein à main, de la batterie, du chauffage, de la climatisation et de l'intercommunication sont mises en mémoire dans le processeur de wagon (PW), et en ce que ces données mises en mémoire au niveau du véhicule arrêté sont interrogées au niveau d'interfaces normalisées (23), sous forme de sortie sur imprimante concernant les événements.

3. Procédé selon la revendication 1, caractérisé en ce que, grâce à la mise en mémoire des distances (W1, W2) au niveau du cylindre de freins (6.1), une information est calculée pour l'usure de la mâchoire de frein (5.2) et l'indication d'entretien est sortie lorsque des valeurs prédéfinies sont atteintes.

4. Procédé selon la revendication 1, caractérisé en ce que dans le procédé de diagnostic, un test de plausibilité entraînant une sécurité intrinsèque de la détection de données de mesure est effectué.

5. Dispositif pour la mise en oeuvre du procédé selon la revendication 1, caractérisé en ce qu'un dispositif de contrôle et de diagnostic de freins possède un processeur central (ZP) pourvu de dispositifs de sortie visuels (30, 33), magnétiques (32) et acoustiques (34), des processeurs de wagons (PW) reliés au processeur central (ZP) par des conduites de données (25, 26, 27), et des processeurs de bogies (PDG1, PDG2) pourvus d'entrées de points de mesure (BS1, BS2) et reliés aux processeurs de wagons (PW) par des conduites de données (21) et des accouplements de bus de données (24), et en ce qu'il est prévu des détecteurs de pression, reliés aux entrées de points de mesure (BS1, BS2), dans la conduite de frein principale (9/ PHLTG1, PHLTG2), dans les cylindres de freins (6.1, 6.2/ PZYL1, PZYL2) et dans les soupapes à bascules (11.1, 11.2/ PWV1, PWV2), des capteurs de course (W1, W2) au niveau des cylindres de freins (6.1, 6.2) et des capteurs de force (KB1, KB2, KB3, KB4) dans les leviers de freins (4.1, 4.2).

6. Dispositif selon la revendication 5, caractérisé en ce que des processeurs de wagons (PW) possèdent des entrées de données (HBR) à partir de la position de frein à main et des détecteurs de systèmes de wagons (WS), et une interface normalisée (23).

# Fig.1

# Fig.2

# Fig.3

# Fig.4

PHLTG          SWF

PWV 1/2

PZYL1,2E/KBE

PZYL1 DG.1          PZYL2 DG.2

W1   KB1   W2   KB2   W3   KB3   W4   KB4

# Fig.5

Bremsprobe: Bremsen anziehen

Erfassen der Messwerte PHLTG, PWV, PZYL1 und 2, KB1 bis 4, W1 und W2

Berechnen Sollwert Zylinderdruck PZYLE = f (PHLTG, PWV)

Berechnen Sollwerte Bremskraft KBE1 = f (PZYL1), KBE2 = f (PZYL2)

Berechnen der zulässigen Abweichungen D1 und D2 der Messwerte
PZYL1 und PZYL2 von PZYLE

Feststellen der effektiv vorhandenen Abweichungen PZYL1 und PZYL2 von PZYLE
PZYL1 - PZYLE ≦ oder > ± D1 ?     PZYL2 - PZYLE ≦ oder > ± D2 ?

≦ D1     ≦ D2          > D1     ≦ D2          ≦ D1     > D2          > D1     > D2

ist KB1- :PZYL1 bezw.KBE1 o.k.?   nein

ist KB -4:PZYL2 bezw.KBE2 o.k.?   nein

Plausibilitäts-prüfung für PHLTG und PWV

Störung Pneumatic DG1     ja

Messung Zylinderdruck PZYL1 fehlerhaft

Störung Pneumatic DG2     ja

Messung Zylinderdruck PZYL2 fehlerhaft

PHLTG plausibel PWVnicht plausibel

PHLTG nicht plausibel PWV plausibel

PHLTG plausibel PWV plausibel

PHLTGnicht plausibel PWV nicht plausibel

Messung PWV fehlerhaft

Messung PHLTG fehlerhaft

Störung Pneumatiksystem oder Sollwertmessung

ist KB3,4:PZYL2 bezw.KBE2 o.k.?   nein

ist KB1,2:PZYL1 bezw.KBE1 o.k.?   nein

ist KB3,4:PZYL2 bezw.KBE2 o.k.?   nein

Berechnen von WE = f (PZYL)     ja

Bremskraft DG2 entspricht nicht PZYL2

Bremskraft DG1 entspricht nicht PZYL1     ja

Bremskraft DG1 u.DG2 entspricht nicht PZYL1 und PZYL2     ja

Vergleich der Kraft- und Wegmessung mit den Sollwerten KBE und WE
i=1 bis4 fürKB,1 und2 fürW1,3 und4 fürW2

-Detaildiagnose nicht möglich
-Zustand Bremssystem nicht sicher

KBi = o.k.
Wi = o.k.

KBi ≠ KBE
Wi = o.k.

KBi = o.k.
Wi ≠ WE

KBi ≠ KBE
Wi ≠ WE

Wi > WE

Wi < WE

Messung KBi ist fehlerhaft

Messung Wi nicht plausibel Wert zu gross

Messung Wi nicht plausibel Wert zu klein

Bremse defekt

Fehlerspezifische Instruktionen für Detailtests und weiteres Vorgehen